(19) Europäisches Patentamt

European Patent Office

Office européen des brevets

(11) **EP 4 636 615 A1**

(12) **EUROPEAN PATENT APPLICATION**
published in accordance with Art. 153(4) EPC

(43) Date of publication:
**22.10.2025 Bulletin 2025/43**

(21) Application number: **23915661.5**

(22) Date of filing: **27.10.2023**

(51) International Patent Classification (IPC):
**G06F 21/12** (2013.01)

(52) Cooperative Patent Classification (CPC):
**G06F 8/41; G06F 21/12; G06F 21/14**

(86) International application number:
**PCT/CN2023/127131**

(87) International publication number:
**WO 2024/148903 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 CN 202310027783
20.04.2023 CN 202310429406**

(71) Applicant: **Huawei Cloud Computing
Technologies Co., Ltd.
Guiyang, Guizhou 550025 (CN)**

(72) Inventors:
- YE, Wei
  **Guiyang, Guizhou 550025 (CN)**
- TAN, Zongwei
  **Guiyang, Guizhou 550025 (CN)**
- WANG, Yawei
  **Guiyang, Guizhou 550025 (CN)**
- WANG, Qian
  **Guiyang, Guizhou 550025 (CN)**

(74) Representative: **Grünecker Patent- und
Rechtsanwälte
PartG mbB
Leopoldstraße 4
80802 München (DE)**

(54) **SOURCE CODE PROTECTION METHOD AND APPARATUS**

(57) Embodiments of this application provide a source code protection method and apparatus. The method includes: loading a bytecode compiler; obtaining a source code file of a program that is to be run in a target runtime environment; analyzing the source code file of the program via the bytecode compiler, to obtain a syntax tree corresponding to the source code file of the program; converting, via the bytecode compiler, the syntax tree into a target bytecode file corresponding to the source code file of the program; generating, via the bytecode compiler, a target bytecode loader corresponding to the target bytecode file, where the target bytecode loader is configured to load the target bytecode file; and deploying the target bytecode file and the target bytecode loader into the target runtime environment. The solutions of embodiments of this application are conducive to improving the effect of source code protection.

700

Obtain a source code file of a program that is to be run in a target runtime environment — 710

Load a bytecode compiler — 720

Analyze the source code file of the program via the bytecode compiler, to obtain a syntax tree corresponding to the source code file of the program. — 730

Convert, via the bytecode compiler, the syntax tree into a target bytecode file corresponding to the source code file of the program — 740

Generate, via the bytecode compiler, a target bytecode loader corresponding to the target bytecode file, where the target bytecode loader is configured to convert in a memory the target bytecode file into a bytecode file that is executable by a target engine in the target runtime environment — 750

Deploy the target bytecode file and the target bytecode loader into the target runtime environment — 760

FIG. 7

## Description

This application claims priority to Chinese Patent Application No. 202310027783.1, filed with the China National Intellectual Property Administration on January 9, 2023 and entitled "SOURCE CODE PROTECTION METHOD AND APPARATUS", and Chinese Patent Application No. 202310429406.0, filed with the China National Intellectual Property Administration on April 20, 2023 and entitled "SOURCE CODE PROTECTION METHOD AND APPARATUS", both of which are incorporated herein by reference in their entireties.

## TECHNICAL FIELD

Embodiments of this application relate to the field of computer security technologies, and more specifically, to a source code protection method and apparatus.

## BACKGROUND

As a widely used programming language, JavaScript plays an increasingly important role in the field of computer technology. JavaScript-based products can be deployed in a variety of runtime environments. JavaScript source code leakage may cause serious consequences, such as product replication or attacks.

Currently, related solutions provide some schemes for protecting JavaScript source code, for example, through obfuscation, encryption, compilation, or the like. The obfuscation approach can reduce the readability of code and make the flow of execution confusing. However, special formatting tools can reduce the difficulty in reading the obfuscated code, making it relatively easy to restore the source code. The encryption approach refers to encrypting source code to protect the source code. The encrypted code cannot be directly run in a JavaScript engine and needs to be decrypted before execution. This approach has low execution efficiency, and there is a risk of leakage of passwords or keys. The compilation approach refers to compiling source code into bytecode through the compilation capability of the V8 engine to protect the source code. Currently, there is no available bytecode decompilation tool for the V8 engine, and reverse engineering of bytecode is relatively difficult. Therefore, this approach can provide some protection. However, the V8 compiler is open-source, and execution logic of the program can still be restored by analyzing the bytecode.

Therefore, how to improve the effect of source code protection has become an urgent problem to be resolved.

## SUMMARY

Embodiments of this application provide a source code protection method and apparatus, which are conducive to improving the effect of source code protection.

According to a first aspect, a source code protection method is provided. The method includes: obtaining a source code file of a program that is to be run in a target runtime environment; loading a bytecode compiler; analyzing the source code file of the program via the bytecode compiler, to obtain a syntax tree corresponding to the source code file of the program; converting, via the bytecode compiler, the syntax tree into a target bytecode file corresponding to the source code file of the program; generating, via the bytecode compiler, a target bytecode loader corresponding to the target bytecode file, where the target bytecode loader is configured to convert the target bytecode file into a bytecode file that is executable by a target engine in the target runtime environment; and deploying the target bytecode file and the target bytecode loader into the target runtime environment.

According to the solution of this embodiment of this application, for execution in the target engine, the target bytecode file needs to be converted into a bytecode file that is executable by the target engine, via the target bytecode loader corresponding to the target bytecode file. In this way, even if the target bytecode file is disclosed, it is difficult to obtain useful information directly from the target bytecode file.

In addition, because the target bytecode file and the target bytecode loader need to be used together, reverse engineering also needs to be performed on the target bytecode file and the target bytecode loader together. The target bytecode loader is a binary machine code file obtained through compilation. The difficulty of reverse engineering is increased to a level of decompiling binary machine code. Reverse engineering is very difficult, and execution logic of the program is difficult to be restored. Therefore, the solution of this embodiment of this application is conducive to improving the effect of source code protection.

In addition, the target bytecode loader converts, in the memory, the target bytecode file into a bytecode file that is executable by the target engine. In other words, the conversion is dynamic conversion completed during runtime, and the target bytecode file can be executed by the target engine immediately after the conversion. This reduces a risk of leakage of the executable bytecode file, which is conducive to further improving the effect of source code protection.

In addition, the solution of this embodiment of this application allows for configuration and integration in a build environment of a user. In other words, the user does not need to adjust a current build process or build script, and only needs to configure this solution in a build task to implement integration. The tool is controlled on the user side throughout the entire process, and source code protection can be implemented in the build process of the product.

With reference to the first aspect, in some implementations of the first aspect, the target bytecode file is a bytecode file that is not executable by the target engine.

With reference to the first aspect, in some implementations of the first aspect, generating, via the bytecode compiler, the target bytecode loader corresponding to the target bytecode file includes: compiling a mapping enumeration file and a source code file of an initial bytecode loader via the bytecode compiler, to obtain the target bytecode loader, where the mapping enumeration file is used to indicate a mapping relationship between first instructions in a first bytecode instruction set and second instructions in a second bytecode instruction set, the first instructions are instructions that are executable by the target engine in the target runtime environment, instructions in the target bytecode file belong to the second bytecode instruction set, each of different first instructions in the first bytecode instruction set corresponds to different second instructions in the second bytecode instruction set, and the second instructions are instructions that are not executable by the target engine.

The first bytecode instruction set is a bytecode instruction set of the target engine.

The target bytecode loader is obtained based on the mapping relationship. In the memory, the instructions in the target bytecode file may be converted, based on the mapping relationship, into instructions that are executable by the target engine, to obtain the bytecode file that is executable by the target engine.

With reference to the first aspect, in some implementations of the first aspect, each first instruction in the first bytecode instruction set corresponds to one or more second instructions in the second bytecode instruction set.

Different first instructions may correspond to different quantities of second instructions.

With reference to the first aspect, in some implementations of the first aspect, at least one first instruction in the first bytecode instruction set corresponds to a plurality of second instructions in the second bytecode instruction set.

For example, each first instruction corresponds to at least two second instructions.

In the solution of this embodiment of this application, a first instruction in the first bytecode instruction set may correspond to a plurality of second instructions in the second bytecode instruction set, and the same first instruction in the initial bytecode file may be translated into a plurality of different second instructions. In this way, the difficulty of reverse engineering can be increased, thereby further improving the effect of source code protection.

With reference to the first aspect, in some implementations of the first aspect, the method further includes randomly generating the mapping relationship between the first instructions in the first bytecode instruction set and the second instructions in the second bytecode instruction set.

In this embodiment of this application, the mapping relationship is randomly obtained, and accordingly, the target bytecode file is random. This can further increase the difficulty in restoring execution logic from the target bytecode file, thereby further improving the effect of source code protection.

With reference to the first aspect, in some implementations of the first aspect, each second instruction in the second bytecode instruction set corresponds to one first instruction in the first bytecode instruction set.

A larger quantity of second instructions corresponding to the first instruction indicates a higher difficulty of reverse engineering, which is more conducive to improving the effect of source code protection. However, an excessive quantity of second instructions corresponding to the first instruction may affect the efficiency of subsequent execution of the program. In this embodiment of this application, each second instruction corresponds to one first instruction. The quantity of second instructions corresponding to each first instruction may be adjusted by adjusting a size of the second bytecode instruction set, so as to adjust the protection effect and the execution efficiency of the source code, which is conducive to achieving a balance between the protection effect and the execution efficiency of the source code.

With reference to the first aspect, in some implementations of the first aspect, a quantity of second instructions in the second bytecode instruction set is based on a quantity of first instructions in the first bytecode instruction set.

In this embodiment of this application, the size of the second bytecode instruction set may be determined based on a size (size) of the first bytecode instruction set, so that a second bytecode instruction set that matches the size of the first bytecode instruction set can be obtained, thereby achieving a balance between the protection effect and the execution efficiency of the source code.

With reference to the first aspect, in some implementations of the first aspect, the quantity of instructions in the second bytecode instruction set satisfies the following formula:

$$n = k * ceil(\sqrt{2m});$$

where n represents a square root of the quantity of instructions in the second bytecode instruction set, n is a positive integer, m represents the quantity of instructions in the first bytecode instruction set, m is a positive integer, ceil() represents a ceiling function, k represents an adjustment parameter, which is used to adjust the quantity of instructions in the second bytecode instruction set, and k is a positive number.

With reference to the first aspect, in some implementations of the first aspect, converting, via the bytecode compiler, the syntax tree into the target bytecode file corresponding to the source code file of the program includes: converting, via the bytecode compiler, the syntax tree into an initial bytecode file corresponding to the source code file of the program, where instructions in the initial bytecode file belong to the first bytecode instruction set; and translating, via the bytecode compiler, the instructions in the initial bytecode file according to the mapping relationship to obtain the target bytecode file.

With reference to the first aspect, in some implementations of the first aspect, translating, via the bytecode compiler, the instructions in the initial bytecode file according to the mapping relationship to obtain the target bytecode file includes: translating, via the bytecode compiler, the instructions in the initial bytecode file according to the mapping relationship, where invalid instructions are inserted in the translation process to obtain the target bytecode file, and the invalid instructions do not belong to the second bytecode instruction set.

In this embodiment of this application, the target bytecode file includes invalid instructions. This can further increase the difficulty of reverse engineering, thereby further improving the effect of source code protection.

With reference to the first aspect, in some implementations of the first aspect, the quantity of invalid instructions is based on the quantity of instructions in the initial bytecode file.

In this embodiment of this application, the quantity of invalid instructions may be determined based on the quantity of instructions in the initial bytecode file, so that the quantity of invalid instructions that matches the size of the initial bytecode file, thereby achieving a balance between the protection effect and the execution efficiency of the source code.

With reference to the first aspect, in some implementations of the first aspect, the quantity of invalid instructions satisfies the following formula:

$$ j = ceil(\sqrt{t} * \log_a t) ; $$

where j represents the quantity of invalid instructions, ceil() represents a ceiling function, t represents the quantity of instructions in the initial bytecode file, t is a positive integer, a represents a protection parameter, which is used to adjust the quantity of invalid instructions, and a is greater than 0 and not equal to 1.

According to a second aspect, a source code protection method is provided. The method includes: loading a target bytecode loader; sending a loading request to the target bytecode loader, where the loading request is used to request to load a target bytecode file corresponding to a source code file of a program; loading the target bytecode file to a memory of a target runtime environment via the target bytecode loader; converting, in the memory via the target bytecode loader, the target bytecode file into a bytecode file that is executable by a target engine in the target runtime environment; and

compiling the executable bytecode file into machine code and executing the machine code via the target engine.

The target bytecode loader is a binary machine code file obtained through compilation.

According to the solution of this embodiment of this application, the target bytecode file is a bytecode file that is not executable by the target engine; and for execution in the target engine, the target bytecode file needs to be converted into a bytecode file that is executable by the target engine, via the target bytecode loader corresponding to the target bytecode file. In this way, even if the target bytecode file is disclosed, it is difficult to obtain useful information directly from the target bytecode file, which is conducive to improving the effect of source code protection.

In addition, the target bytecode loader converts, in the memory, the target bytecode file into a bytecode file that is executable by the target engine. In other words, the conversion is dynamic conversion completed during runtime, and the target bytecode file can be executed by the target engine immediately after the conversion. This reduces a risk of leakage of the executable bytecode file, which is conducive to further improving the effect of source code protection.

In addition, because the target bytecode file and the target bytecode loader need to be used together, reverse engineering also needs to be performed on the target bytecode file and the target bytecode loader together. The target bytecode loader is a binary machine code file obtained through compilation. The difficulty of reverse engineering is increased to a level of decompiling binary machine code. Reverse engineering is very difficult, and execution logic of the program is difficult to be restored, which is conducive to further improving the effect of source code protection.

With reference to the second aspect, in some implementations of the second aspect, the target bytecode file is a bytecode file that is not executable by the target engine.

With reference to the second aspect, in some implementations of the second aspect, the target bytecode loader is obtained by compiling a mapping enumeration file and a source code file of an initial bytecode loader, the mapping enumeration file is used to indicate a mapping relationship between first instructions in a first bytecode instruction set and second instructions in a second bytecode instruction set, the first instructions in the first bytecode instruction set are instructions that are executable by the target engine, instructions in the target bytecode file belong to the second bytecode instruction set, each of different first instructions in the first bytecode instruction set corresponds to different second instructions in the second bytecode instruction set, and the second instructions are instructions that are not executable by the target engine.

With reference to the second aspect, in some implementations of the second aspect, at least one first instruction in the first bytecode instruction set corresponds to a plurality of second instructions in the second bytecode instruction set.

With reference to the second aspect, in some implementations of the second aspect, the mapping relationship between the first instructions in the first bytecode instruction set and the second instructions in the second bytecode instruction set is randomly generated.

With reference to the second aspect, in some implementations of the second aspect, a quantity of second instructions in the second bytecode instruction set is based on a quantity of first instructions in the first bytecode instruction set.

With reference to the second aspect, in some implementations of the second aspect, the quantity of second instructions in the second bytecode instruction set satisfies the following formula:

$$n = k * ceil(\sqrt{2m});$$

where n represents a square root of the quantity of second instructions in the second bytecode instruction set, n is a positive integer, m represents the quantity of second instructions in the first bytecode instruction set, m is a positive integer, ceil() represents a ceiling function, k represents an adjustment parameter, which is used to adjust the quantity of second instructions in the second bytecode instruction set, and k is a positive number.

With reference to the second aspect, in some implementations of the second aspect, the target bytecode file is obtained by translating, according to the mapping relationship between the first instructions in the first bytecode instruction set and the second instructions in the second bytecode instruction set, instructions in an initial bytecode file corresponding to the source code file of the program, and the instructions in the initial bytecode file belong to the first bytecode instruction set.

With reference to the second aspect, in some implementations of the second aspect, instructions in the target bytecode file further includes invalid instructions, and the invalid instructions do not belong to the second bytecode instruction set.

With reference to the second aspect, in some implementations of the second aspect, the quantity of invalid instructions is based on the quantity of instructions in the initial bytecode file.

With reference to the second aspect, in some implementations of the second aspect, the quantity of invalid instructions satisfies the following formula:

$$j = ceil(\sqrt{t} * \log_a t);$$

where j represents the quantity of invalid instructions, ceil() represents a ceiling function, t represents the quantity of instructions in the initial bytecode file, t is a positive integer, a represents a protection parameter, which is used to adjust the quantity of invalid instructions, and a is greater than 0 and not equal to 1.

According to a third aspect, a source code protection apparatus is provided. The apparatus includes units/modules configured to perform the method according to any one of the first aspect and the implementations of the first aspect.

According to a fourth aspect, a source code protection apparatus is provided. The apparatus includes units/modules configured to perform the method according to any one of the second aspect and the implementations of the second aspect.

It should be understood that extensions, limitations, explanations, and descriptions of related content in the first aspect are also applicable to the same content in the second aspect, the third aspect, and the fourth aspect.

According to a fifth aspect, a computing device cluster is provided. The computing device cluster includes at least one computing device, and each computing device includes a processor and a memory. The processor of the at least one computing device is configured to execute instructions stored in the memory of the at least one computing device, so that the computing device cluster performs the method according to any one of the first aspect and the implementations of the first aspect, or so that the computing device cluster performs the method according to any one of the second aspect and the implementations of the second aspect.

According to a sixth aspect, a computer-readable medium is provided. The computer-readable medium includes computer program instructions. When the computer program instructions are executed by a computing device cluster, the computing device cluster performs the method according to any one of the first aspect and the implementations of the first aspect, or performs the method according to any one of the second aspect and the implementations of the second aspect.

According to a seventh aspect, a computer program product including instructions is provided. When the instructions are run by a computing device cluster, the computing device cluster is enabled to perform the method according to any one of the first aspect and the implementations of the first aspect, or the computing device cluster is enabled to perform the method according to any one of the second aspect and the implementations of the second aspect.

**BRIEF DESCRIPTION OF DRAWINGS**

FIG. 1 is a diagram of an obfuscation approach;
FIG. 2 is a diagram of an encryption approach;
FIG. 3 is a diagram of a compilation approach;
FIG. 4 is a diagram of a cloud environment scenario according to an embodiment of this application;
FIG. 5 is a diagram of a browser scenario according to an embodiment of this application;
FIG. 6 is a diagram of a local client scenario according to an embodiment of this application;

FIG. 7 is a schematic flowchart of a source code protection method according to an embodiment of this application;

FIG. 8 is a schematic flowchart of a source code processing process according to an embodiment of this application;

FIG. 9 is a schematic flowchart of a method for generating a target bytecode file according to an embodiment of this application;

FIG. 10 is a diagram of a mapping relationship according to an embodiment of this application;

FIG. 11 is a diagram of a translation process according to an embodiment of this application;

FIG. 12 is a schematic flowchart of another source code protection method according to an embodiment of this application;

FIG. 13 is a block diagram of a source code protection apparatus according to an embodiment of this application;

FIG. 14 is a block diagram of another source code protection apparatus according to an embodiment of this application;

FIG. 15 is a block diagram of a computing device according to an embodiment of this application;

FIG. 16 is a block diagram of a computing device cluster according to an embodiment of this application; and

FIG. 17 is a diagram of a connection manner of a computing device cluster according to an embodiment of this application.

## DESCRIPTION OF EMBODIMENTS

The following describes technical solutions of embodiments in this application with reference to accompanying drawings.

Currently, related solutions provide some schemes for protecting JavaScript source code, for example, through obfuscation, encryption, compilation, or the like.

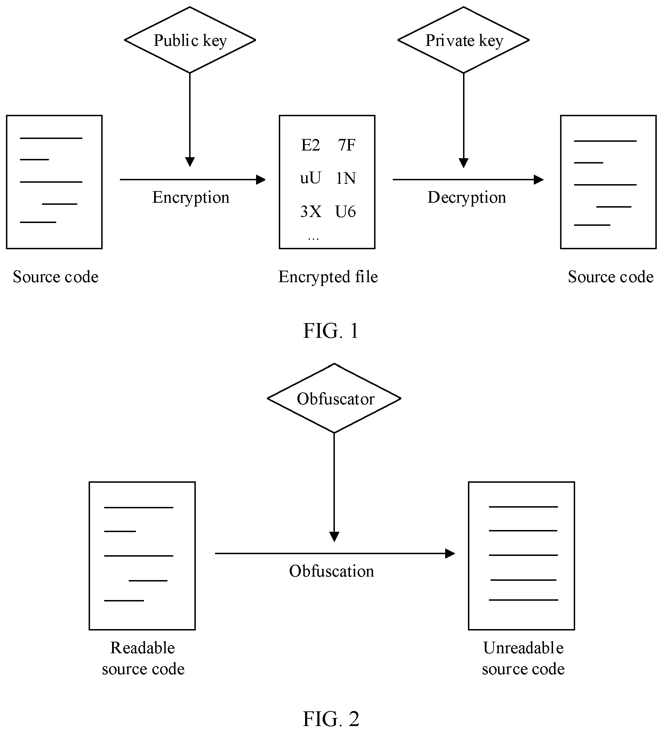

FIG. 1 is a diagram of an obfuscation approach.

The obfuscation approach refers to obfuscating source code to reduce the readability of code and make the flow of execution confusing, thereby reducing security risks and protecting the source code. For example, as shown in FIG. 1, an obfuscator obfuscates readable source code to obtain unreadable source code. Generally, the obfuscator can process the source code by changing variable names, disrupting the execution logic, and converting the code to reduce the readability of the code. Converting the code refers to converting the code into text in another format.

However, special formatting tools can reduce the difficulty in reading the code, which makes it easy to restore the obfuscated source code and difficult to achieve a better protection effect.

FIG. 2 is a diagram of an encryption approach.

The encryption approach refers to encrypting source code to protect the source code. For example, the source code may be encrypted using an asymmetric encryption algorithm or a symmetric encryption algorithm. For example, encryption may be performed by using the following algorithms: the Ron Rivest Adi Shamir Leonard Adleman (Ron Rivest Adi Shamir Leonard Adleman, RSA) algorithm, the advanced encryption standard (advanced encryption standard, AES), the data encryption standard (data encryption standard, DES), and the like.

The encrypted source code cannot be directly executed in a JavaScript engine. Therefore, the encrypted source code needs to be decrypted and then executed in the JavaScript engine. Decryption can achieve reliable protection for the source code only in a secure environment. However, a runtime environment of the JavaScript engine cannot ensure security. Asymmetric encryption is used as an example. As shown in FIG. 2, the source code may be encrypted with a public key and decrypted with a private key for asymmetric encryption. The public key is stored in a server. Correspondingly, the private key is stored in a user environment, for example, a browser or a local NodeJS, which may easily cause key leakage. The NodeJS, a JavaScript runtime environment based on the V8 engine, is a development platform that allows JavaScript to run on a server end.

The encryption approach requires the encrypted source code to be decrypted before execution, which severely affects the execution efficiency of the code. Moreover, this approach needs to be set in a user environment, and integration is relatively complex. In addition, there is a risk of passwords or keys of the client software, which affects the effect of source code protection.

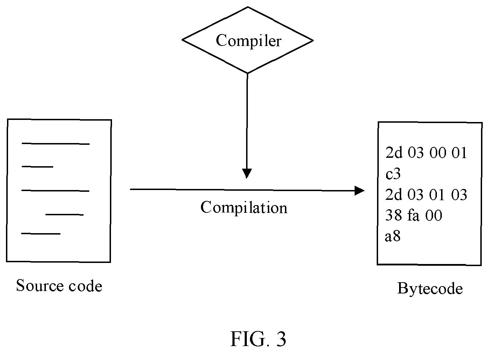

FIG. 3 is a diagram of a compilation approach.

As shown in FIG. 3, the compilation approach refers to compiling source code into bytecode (bytecode) through a compiler. Bytecode is a binary code in an intermediate state, that is, an intermediate code compiled from the source code. Because the bytecode erases the additional semantic information carried in the source code, reverse engineering is relatively difficult. Currently, the compiler is mainly implemented by a V8 compiler. V8 is an open-source JavaScript engine written in C++ and can be used for browsers and NodeJS. Currently, there is no available bytecode decompilation tool for V8, and reverse engineering of bytecode is relatively difficult. Therefore, this approach can provide some protection.

However, the V8 compiler is open-source, and execution logic of the program can be restored by analyzing the bytecode. Therefore, it is difficult for the compilation approach to provide reliable protection for the source code.

In view of this, an embodiment of this application provides a source code protection method, by which JavaScript source code is compiled into bytecode with randomness, and the bytecode is loaded to a target runtime environment by a bytecode loader corresponding to the bytecode for execution. This solution can increase the difficulty of reverse function to the level of decompiling binary machine code (machine code), which is conducive to improving the effect of source code protection.

The method in an embodiment of this application may be applied to source code protection scenarios in different environments or different product forms. For example, the solution of an embodiment of this application may be used to implement source code protection in a variety of scenarios such as a product run in a cloud environment, a product run in a browser front-end, or a local client product.

The application scenario of the solution of an embodiment of this application is described below by using three scenarios, namely, a cloud environment, a browser front-end, and a local client, as examples.

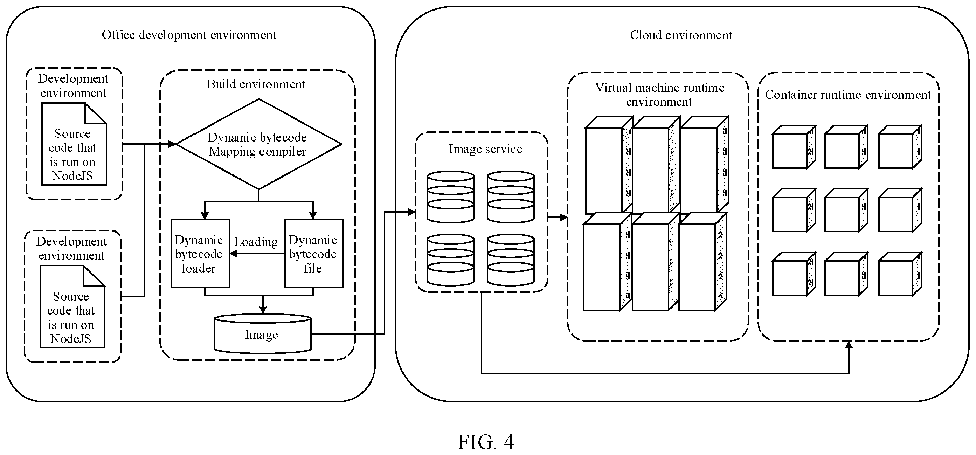

FIG. 4 is a diagram of a cloud environment scenario according to an embodiment of this application.

JavaScript-based products can be run in a cloud environment.

For example, as shown in FIG. 4, the cloud environment may be a NodeJS environment. Users can develop, in an office development environment, software artifacts that are run in the cloud environment. The office development environment may include a development environment and a build environment. The development environment and the build environment may be the same environment or different environments. Users can write in the development environment JavaScript source code that is run in NodeJS, and obtain a dynamic bytecode loader and a dynamic bytecode file in the build environment through a dynamic bytecode mapping compiler. The dynamic bytecode loader is configured to load the dynamic bytecode file. The dynamic bytecode loader and the dynamic bytecode file may be set as image files. The image service in the cloud environment can deploy user images to a runtime environment such as a virtual machine or a container in the cloud environment, so that the software artifacts developed by the users in the office development environment can be run in the cloud environment.

The solution of an embodiment of this application may be used to process the JavaScript source code that is run in the cloud environment, to obtain the dynamic bytecode loader and the dynamic bytecode file, thereby reducing a risk of reverse engineering caused by product leakage in the cloud environment, and protecting the source code.

For example, the solution of an embodiment of this application may be applied to a scenario of a cloud function service. Users can deploy a dynamic bytecode loader and a dynamic bytecode file together in a cloud environment, thereby reducing a risk of reverse engineering caused by product leakage in the cloud environment, and reducing limitations on security of a public cloud.

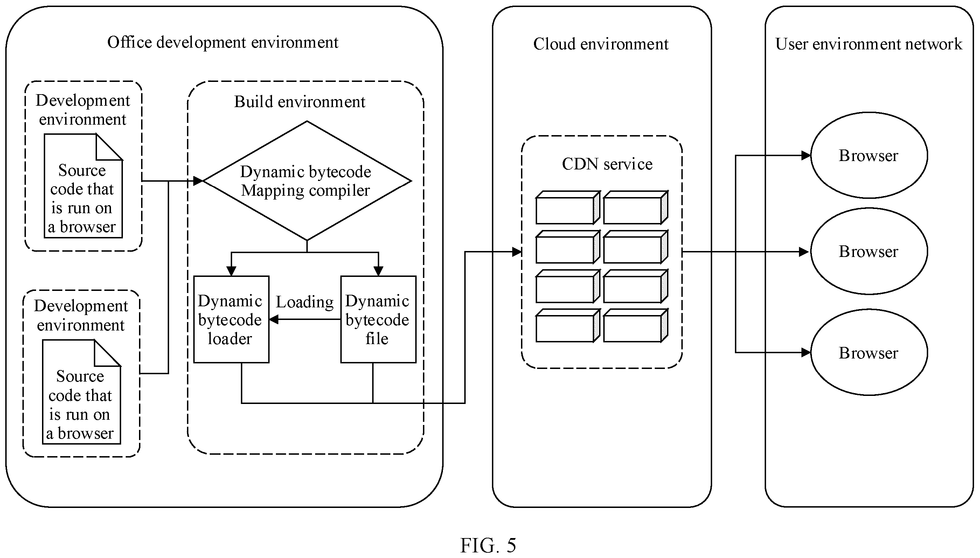

FIG. 5 is a diagram of a browser scenario according to an embodiment of this application.

JavaScript-based products can be run on a browser front-end.

For example, as shown in FIG. 5, users can develop, in an office development environment, software artifacts that are run on the browser front-end. The browser front-end is a browser in a user environment network (internet) in FIG. 5. The office development environment may include a development environment and a build environment. Users can write in the development environment JavaScript source code that is run in a browser, and obtain a dynamic bytecode loader and a dynamic bytecode file in the build environment through a dynamic bytecode mapping compiler. The dynamic bytecode loader is configured to load the dynamic bytecode file. The dynamic bytecode loader and the dynamic bytecode file can be delivered to the browser through a content delivery network (content delivery network, CDN) service in the cloud environment, so that the software artifacts developed by the users in the office development environment can be run on the browser.

The solution of an embodiment of this application may be used to process the JavaScript source code that is run in the browser front-end, to obtain the dynamic bytecode loader and the dynamic bytecode file, thereby reducing a risk of reverse engineering of the product, and protecting the source code.

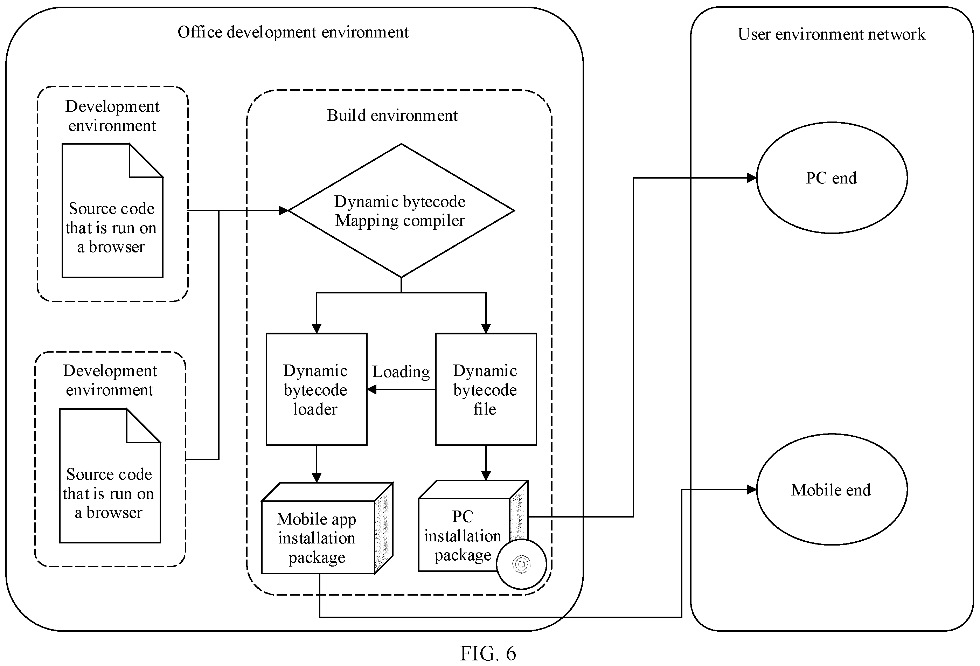

FIG. 6 is a diagram of a local client scenario according to an embodiment of this application.

Local client software can be designed based on JavaScript. For example, the local client software may be personal computer (personal computer, PC) end software or mobile end software or the like that is run in a user environment network.

For example, as shown in FIG. 6, users can develop local client software in an office development environment. The office development environment may include a development environment and a build environment. The users can write JavaScript source code of the local client software in the development environment, and obtain a dynamic bytecode loader and a dynamic bytecode file in the build environment through a dynamic bytecode mapping compiler. The dynamic bytecode loader is configured to load the dynamic bytecode file. For example, the dynamic bytecode loader and the dynamic bytecode file may be converted into a PC installation package, which may be used to install the software on the PC end. For another example, the dynamic bytecode loader and the dynamic bytecode file may be converted into a mobile application (application, APP) installation package, which may be used to install the software on the mobile end.

The solution of an embodiment of this application may be used to process the JavaScript source code of the local client software, to obtain the dynamic bytecode loader and the dynamic bytecode file, thereby reducing a risk of reverse engineering of the product, and protecting the source code.

It should be understood that the application scenarios shown in FIG. 4 to FIG. 6 are merely examples, and constitute no limitation on the solutions of embodiments of this application. For example, in FIG. 5, the dynamic bytecode loader and the dynamic bytecode file are delivered to the browser through the CDN. In another implementation, the dynamic bytecode loader and the dynamic bytecode file may alternatively be deployed in the browser in another manner.

The solution of an embodiment of this application can also be applied to another scenario that requires source code protection. This is not limited in embodiments of this application.

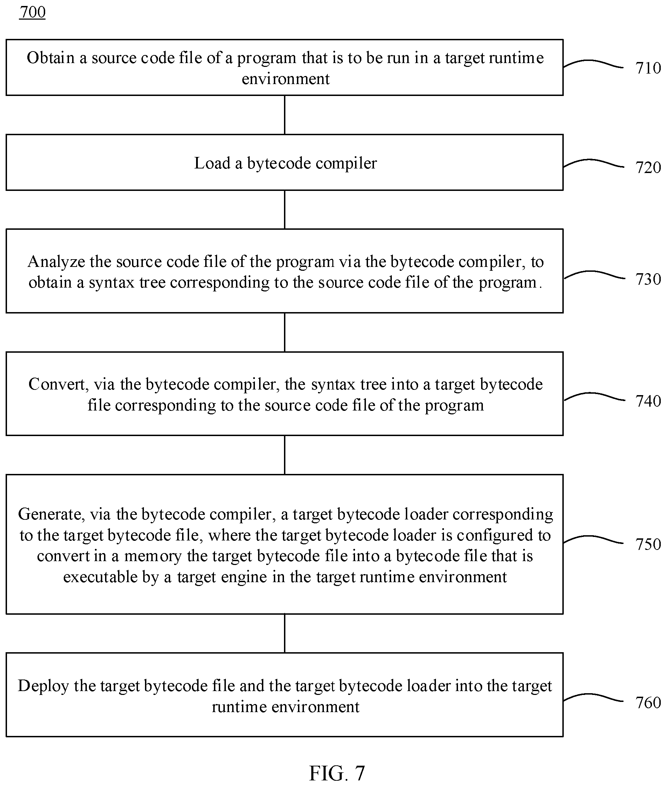

FIG. 7 shows a source code protection method 700 according to an embodiment of this application.

The method 700 includes step 710 to step 760, which are described below.

710: Obtain a source code file of a program that is to be run in a target runtime environment.

720: Load a bytecode compiler.

730: Analyze the source code file of the program via the bytecode compiler, to obtain a syntax tree corresponding to the source code file of the program.

740: Convert, via the bytecode compiler, the syntax tree into a target bytecode file corresponding to the source code file of the program.

750: Generate, via the bytecode compiler, a target bytecode loader corresponding to the target bytecode file, where the target bytecode loader is configured to convert in a memory the target bytecode file into a bytecode file that is executable by a target engine in the target runtime environment.

760: Deploy the target bytecode file and the target bytecode loader into the target runtime environment.

The target bytecode loader is configured to load the target bytecode file.

In step 710, the source code file of the program may be obtained in a variety of manners.

For example, step 710 may include reading the source code file of the program.

For example, step 710 may include writing the source code file of the program.

The program to be run in the target runtime environment is a program that can be deployed to run in the target runtime environment.

For example, the target runtime environment may be any of the runtime environments in FIG. 4 to FIG. 6.

The target bytecode file is a bytecode file that is not executable by the target engine.

According to the solution of this embodiment of this application, the target bytecode file is a bytecode file that is not executable by the target engine; and for execution in the target engine, the target bytecode file needs to be converted into a bytecode file that is executable by the target engine, via the target bytecode loader corresponding to the target bytecode file. In this way, even if the target bytecode file is disclosed, it is difficult to obtain useful information directly from the target bytecode file.

In addition, because the target bytecode file and the target bytecode loader need to be used together, reverse engineering also needs to be performed on the target bytecode file and the target bytecode loader together. The target bytecode loader is a binary machine code file obtained through compilation. The difficulty of reverse engineering is increased to a level of decompiling binary machine code. Reverse engineering is very difficult, and execution logic of the program is difficult to be restored. Therefore, the solution of this embodiment of this application is conducive to improving the effect of source code protection.

In addition, the target bytecode loader converts, in the memory, the target bytecode file into a bytecode file that is executable by the target engine. In other words, the conversion is dynamic conversion completed during runtime, and the target bytecode file can be executed by the target engine immediately after the conversion. This reduces a risk of leakage of the executable bytecode file, which is conducive to further improving the effect of source code protection.

In addition, the solution of this embodiment of this application allows for configuration and integration in a build environment of a user. In other words, the user does not need to adjust a current build process or build script, and only needs to configure this solution in a build task to implement integration. The tool is controlled on the user side throughout the entire process, and source code protection can be implemented in the build process of the product.

Optionally, step 740 may be implemented by step 741 and step 742 (not shown in the figure).

741: The bytecode compiler generates, according to the syntax tree, an initial bytecode file corresponding to the source code file of the program.

742: The bytecode compiler translates instructions in the initial bytecode file according to a mapping relationship between first instructions in a first bytecode instruction set and second instructions in a second bytecode instruction set, to obtain the target bytecode file, where the first instructions in the first bytecode instruction set are instructions that are executable by the target engine, the instructions in the initial bytecode file belong to the first bytecode instruction set, and instructions in the target bytecode file belong to the second bytecode instruction set. Each of different first instructions in the first bytecode instruction set corresponds to different second instructions in the second bytecode instruction set. The second instructions in the second bytecode instruction set are instructions that are executable by the target engine.

The source code file may be a JavaScript source code file. Source code may also be referred to as source code.

For example, step 730 may include generating an abstract syntax tree corresponding to the source code file of the program.

For example, the source code file of the program may be parsed by a syntax tree parser, to generate a corresponding abstract syntax tree in the memory.

For example, step 741 may include generating the initial bytecode file according to the abstract syntax tree.

For example, a bytecode file, that is, the initial bytecode file, may be generated by an interpreter (Ignition) according to the abstract syntax tree.

The initial bytecode file is a bytecode file that is executable by the target engine.

An instruction set of the bytecode compiler used to perform step 730 and step 741 is the first bytecode instruction set. For example, step 730 and step 741 may be implemented by using the existing bytecode compiler of the user, so that costs of user configuration and integration can be reduced.

For example, step 740 may include generating the target bytecode file according to the abstract syntax tree.

In this way, the target bytecode file may be generated directly according to the abstract syntax tree. In this case, an instruction set of the bytecode compiler used to perform step 730 and step 740 is the second bytecode instruction set.

Optionally, step 750 may include compiling a mapping enumeration file and a source code file of an initial bytecode loader, to obtain the target bytecode loader. The mapping enumeration file is used to indicate the mapping relationship between the first instructions in the first bytecode instruction set and the second instructions in the second bytecode instruction set.

The target bytecode loader is configured to convert, in the memory of the target runtime environment, the target bytecode file into a bytecode file that is executable by the target engine, for example, the initial bytecode file.

The target bytecode loader is obtained based on the mapping relationship. In the memory, the instructions in the target bytecode file may be converted, based on the mapping relationship, into instructions that are executable by the target engine, to obtain the bytecode file that is executable by the target engine.

The first bytecode instruction set is a bytecode instruction set of the target engine. An instruction set may be represented in the form of a table. In this case, the instruction set may be represented as an instruction table. For example, the first bytecode instruction set may be a bytecode definition table of a version of the target engine in the target runtime environment.

The first bytecode instruction set may also be referred to as an original instruction set. The second bytecode instruction set may also be referred to as a dynamic bytecode instruction set.

It should be noted that "first" in a first instruction is only used to indicate that the instruction belongs to the first bytecode instruction set, and has no other limiting effect. All instructions in the first bytecode instruction set are first instructions. The first instructions may also be referred to as original instructions. "Second" in a second instruction is only used to indicate that the instruction belongs to the second bytecode instruction set, and has no other limiting effect. All instructions in the second bytecode instruction set are second instructions. The second instructions may also be referred to as dynamic instructions.

Optionally, each first instruction in the first bytecode instruction set corresponds to one or more second instructions in the second bytecode instruction set.

Accordingly, a quantity of instructions in the second bytecode instruction set is greater than or equal to a quantity of instructions in the first bytecode instruction set.

Different first instructions may correspond to different quantities of second instructions. Alternatively, different first instructions may correspond to the same quantity of second instructions.

For example, instruction #1 in the first bytecode instruction set corresponds to one second instruction. Instruction #2 in the first bytecode instruction set corresponds to two second instructions.

Further, at least one first instruction in the first bytecode instruction set corresponds to a plurality of second instructions in the second bytecode instruction set.

For example, each first instruction corresponds to at least two second instructions.

In the solution of this embodiment of this application, each first instruction in the first bytecode instruction set may correspond to a plurality of second instructions in the second bytecode instruction set, and the same first instruction in the initial bytecode file may be translated into a plurality of different second instructions. In this way, the difficulty of reverse engineering can be increased, thereby further improving the effect of source code protection.

Optionally, each second instruction in the second bytecode instruction set corresponds to one first instruction in the first bytecode instruction set.

A larger quantity of second instructions corresponding to the first instruction indicates a higher difficulty of reverse engineering, which is more conducive to improving the effect of source code protection. However, an excessive quantity of second instructions corresponding to the first instruction may affect the efficiency of subsequent execution of the program. In this embodiment of this application, each second instruction corresponds to one first instruction. The quantity of second instructions corresponding to each first instruction may be adjusted by adjusting a size of the second bytecode instruction set, so as to adjust the protection effect and the execution efficiency of the source code, which is conducive to achieving a balance between the protection effect and the execution efficiency of the source code.

Optionally, the quantity of instructions in the second bytecode instruction set is based on the quantity of instructions in the first bytecode instruction set.

In this embodiment of this application, the size of the second bytecode instruction set may be determined based on a size of the first bytecode instruction set, so that a second bytecode instruction set that matches the size of the first bytecode instruction set can be obtained, thereby achieving a balance between the protection effect and the execution efficiency of the source code.

Further, the quantity of instructions in the second bytecode instruction set is n*n, the quantity of instructions in the first bytecode instruction set is m, m is a positive integer, and n is determined based on the smallest integer greater than or equal to a square root of 2m.

For example, n may satisfy the following formula:

$$n = k * ceil(\sqrt{2m});$$

ceil() represents a ceiling function. k represents an adjustment parameter, which is used to adjust the size of the second bytecode instruction set. k is a positive number. For example, $k \in (1, 2, 3)$. A value of k may be fixed, or may be adjusted by the user as required.

In the solution of this embodiment of this application, n is determined based on the smallest integer greater than or equal to the square root of 2m, which is conducive to achieving reliable protection for the source code when ensuring the efficiency of subsequent execution of the program.

Optionally, the method 700 further includes randomly generating the mapping relationship between the instructions in the first bytecode instruction set and the instructions in the second bytecode instruction set.

The mapping relationship may be randomly generated. Accordingly, the target bytecode file and the target bytecode loader that are obtained based on the mapping relationship are random.

In this case, the target bytecode loader may be understood as an executable middleware, and can load only the target bytecode file generated this time.

The target bytecode file may also be referred to as a protected dynamic bytecode file, such as the dynamic bytecode file in FIG. 4 and FIG. 5. The target bytecode loader may be referred to as a dynamic bytecode loader, such as the dynamic bytecode loader in FIG. 4 to FIG. 6.

For example, the second bytecode instruction set may be randomly generated.

In this case, both the mapping relationship and the second bytecode instruction set are randomly generated.

Optionally, randomly generating the mapping relationship between the instructions in the first bytecode instruction set and the instructions in the second bytecode instruction set may include the following steps.

S1: Randomly generate the second bytecode instruction set.

For example, a two-dimensional array bytecode mapping table of size n*n is randomly generated according to a size m of a bytecode definition table of a version of the target engine in the target runtime environment. n may be the smallest integer greater than or equal to a square root of 2m. The two-dimensional array bytecode mapping table is used to represent the second bytecode instruction set.

In other words, each value in the two-dimensional array bytecode mapping table is an element in the second bytecode instruction set.

S2: Randomly map each first instruction in the first bytecode instruction set to one or more second instructions in the second bytecode instruction set, to obtain the mapping relationship.

For example, each first instruction is randomly mapped to one or more values in the second bytecode instruction set via a mapping program, until each value in the second bytecode instruction set has a corresponding first instruction. In this way, each second instruction in the second bytecode instruction set corresponds to one first instruction in the first bytecode instruction set.

For specific examples of step S1 and step S2, refer to the following description. No detailed description is provided herein.

It should be understood that the foregoing description is merely an example. In other possible implementations, the second bytecode instruction set may also be fixed. In this case, the first bytecode instruction set and the second bytecode instruction set may be fixed, and the mapping relationship between the two is randomly generated.

In this embodiment of this application, the mapping relationship is randomly obtained, and accordingly, the target bytecode file is random. This can further increase the difficulty in restoring execution logic from the target bytecode file, thereby further improving the effect of source code protection.

Optionally, step 742 may include translating the instructions in the initial bytecode file according to the mapping relationship between the first instructions in the first bytecode instruction set and the second instructions in the second bytecode instruction set, to obtain the target bytecode file, where invalid instructions are inserted in the translation process, and the invalid instructions do not belong to the second bytecode instruction set.

A first instruction in the initial bytecode file is translated into corresponding second instructions based on the mapping relationship, and invalid instructions are randomly inserted.

The invalid instructions do not belong to the second bytecode instruction set. In a subsequent execution process, the target bytecode loader may identify the invalid instructions. For example, the target bytecode loader may convert, based on the mapping relationship, an instruction in the target bytecode file into an instruction that is executable by the target engine. For an invalid instruction in the target bytecode file, that is, an instruction that does not belong to the second bytecode instruction set, the target bytecode loader may identify and delete the instruction.

In this embodiment of this application, the target bytecode file includes invalid instructions. This can further increase the difficulty of reverse engineering, thereby further improving the effect of source code protection.

Generally, a larger quantity of invalid instructions indicates a higher difficulty of reverse engineering, which is more conducive to improving the effect of source code protection. However, an excessive quantity of invalid instructions may affect the efficiency of subsequent execution of the program. In this embodiment of this application, the quantity of invalid instructions may be adjusted to adjust the protection effect and the execution efficiency of the source code, which is conducive to achieving a balance between the protection effect and the execution efficiency of the source code.

Optionally, the quantity of invalid instructions is based on the quantity of instructions in the initial bytecode file.

In this embodiment of this application, the quantity of invalid instructions may be determined based on the quantity of instructions in the initial bytecode file, so that the quantity of invalid instructions that matches the size of the initial bytecode file, thereby achieving a balance between the protection effect and the execution efficiency of the source code.

Further, the quantity j of invalid instructions may satisfy the following formula: $j = ceil(\sqrt{t} * \log_a t)$; j is the smallest integer greater than or equal to $\sqrt{t} * \log_a t$. t is the quantity of instructions in the initial bytecode file. a is a protection parameter, which is used to adjust the quantity of invalid instructions, where a is greater than 0 and is not equal to 1. For example, $a \in (2,3)$. A value of a may be fixed, or may be adjusted by the user as required.

In the solution of this embodiment of this application, j is the smallest integer greater than or equal to $\sqrt{t} * \log_a t$, which is conducive to achieving reliable protection for the source code when ensuring the efficiency of subsequent execution of the program.

The mapping enumeration file may also be referred to as a bytecode definition mapping enumeration file.

For example, the mapping enumeration file may be generated in a temporary directory. In other words, the mapping enumeration file may be generated temporarily. After the target bytecode loader is obtained through compilation, the mapping enumeration file may be deleted.

The initial bytecode loader may be configured to load the initial bytecode file. For example, the initial bytecode loader may be an open-source bytecode loader.

The target bytecode loader may be obtained by compiling the source code file of the initial bytecode loader and the mapping enumeration file using a C++ compiler (complier). The target bytecode loader is machine code (machine code). The target bytecode loader may also be referred to as a binary loader (bin-loader).

In a subsequent execution process of the program, the target bytecode loader may be configured to load the target bytecode file to the target runtime environment, and convert, in the memory, the target bytecode file into a bytecode file that is executable by the target engine. The target engine may execute the bytecode file obtained through conversion.

For example, the target runtime environment may include a cloud environment, a local environment, or the like. For example, the local environment may include the browser shown in FIG. 5. A specific runtime environment may be adjusted as required. This is not limited in embodiments of this application.

For example, the target engine may be the V8 engine. In this case, the target bytecode loader may convert, in the memory, the target bytecode file into an executable V8 bytecode (executable V8 bytecode) file. The V8 engine may convert the bytecode file into machine code that can be run directly and run it.

In the solution of this embodiment of this application, the target bytecode loader converts, in the memory, the target bytecode file into an executable bytecode file. In other words, the conversion is dynamic conversion completed during runtime, and the target bytecode file can be executed by the target engine immediately after the conversion. This reduces a risk of leakage of the executable bytecode file, which is conducive to improving the effect of source code protection.

It should be noted that the step numbers in FIG. 7 are merely for ease of description, and constitute no limitation on the execution order of the steps. For example, step 710 and step 720 may be performed simultaneously. For another example, step 720 is performed after step 710. For another example, step 720 is performed before step 710.

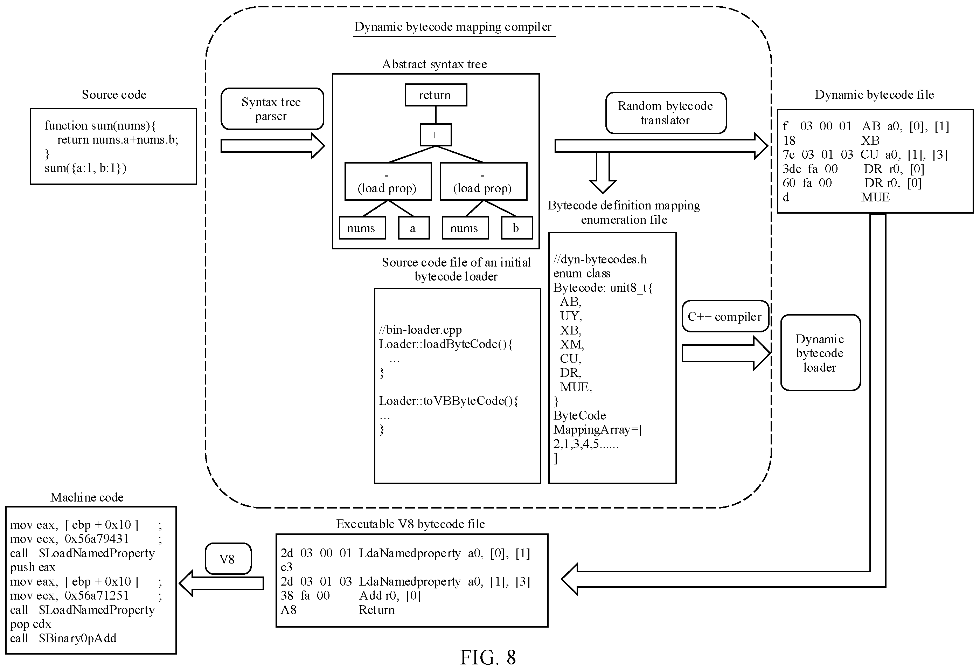

FIG. 8 is a schematic flowchart of a source code processing process according to an embodiment of this application. The flow shown in FIG. 8 may be considered as a specific implementation of the method 700. For specific description, refer to the method 700. To avoid repetition, some parts are appropriately omitted in the description of FIG. 8.

As shown in FIG. 8, the method 800 may be performed by a dynamic bytecode mapping compiler. The dynamic bytecode mapping compiler may include a syntax tree parser, a random bytecode translator, and a C++ compiler. For the C++ compiler, an external C++ compiler may be invoked. In other words, the C++ compiler may be a third-party compiler, for example, an open-source g++ compiler.

The method 800 may include the following steps.

810: The syntax tree parser generates an abstract syntax tree corresponding to a JavaScript source code file.

The syntax tree parser parses the JavaScript source code file and generates, in a memory, the abstract syntax tree corresponding to the JavaScript source code file.

Code in the JavaScript source code file and its corresponding abstract syntax tree that are shown in FIG. 8 are for illustration only and constitute no limitation on the solutions of embodiments of this application. For example, the abstract syntax tree may be generated using an existing solution.

820: The random bytecode translator translates the abstract syntax tree into a protected dynamic bytecode file (that is, a target bytecode file).

The random bytecode translator may translate the abstract syntax tree into a protected dynamic bytecode file corresponding to the abstract syntax tree.

830: The random bytecode translator generates a bytecode definition mapping enumeration file.

The random bytecode translator may generate, in a temporary directory, a bytecode definition mapping enumeration file corresponding to the dynamic bytecode file.

As shown in FIG. 8, the mapping relationship may be indicated by a mapping array (mapping array).

For specific description of step 820 and step 830, refer to the method 700 or method 900. No detailed description is provided herein.

840: The C++ compiler compiles the bytecode definition mapping enumeration file and source code of an initial bytecode loader into a dynamic bytecode loader (that is, a target bytecode loader).

After the dynamic bytecode loader is obtained, the bytecode definition mapping enumeration file in the temporary directory can be deleted.

After obtaining the dynamic bytecode loader and the protected dynamic bytecode file, the user can deploy the dynamic bytecode loader and the protected dynamic bytecode file together into a target runtime environment.

850: The dynamic bytecode loader may convert the protected dynamic bytecode file into a bytecode file that is executable by a target engine.

The dynamic bytecode loader may load the protected dynamic bytecode file to the target runtime environment and convert, in the memory, the protected dynamic bytecode file into a bytecode file that is executable by the target engine.

Using FIG. 4 as an example, the target runtime environment is a cloud environment, and the JavaScript source code file is a source code file that is run in the cloud environment. The target engine in the cloud environment may be the V8 engine. After the dynamic bytecode loader and the dynamic bytecode file are deployed into the cloud environment through the image service, the dynamic bytecode loader can load the protected dynamic bytecode file to the cloud environment and convert it into executable V8 bytecode in the memory.

860: The target engine may execute the executable bytecode file.

As shown in FIG. 8, the target engine may convert the executable bytecode file into machine code and run the machine code.

In the solution of this embodiment of this application, the dynamic bytecode loader and the protected dynamic bytecode file may be deployed together into the target runtime environment. The dynamic bytecode loader loads the dynamic bytecode file and converts it into a bytecode file that is executable by the target engine. The instructions in the dynamic bytecode file are not instructions that are executable by the target engine. Even if the dynamic bytecode file is disclosed, it is difficult to obtain useful information directly from the dynamic bytecode file. Moreover, because the dynamic bytecode file and the dynamic bytecode loader need to be used together, reverse engineering also needs to be performed on the dynamic bytecode file and the dynamic bytecode loader together. The dynamic bytecode loader is a binary machine code file obtained through compilation. Reverse engineering is very difficult, and execution logic of the program is difficult to be restored. Therefore, the solution of this embodiment of this application is conducive to improving the effect of source code protection.

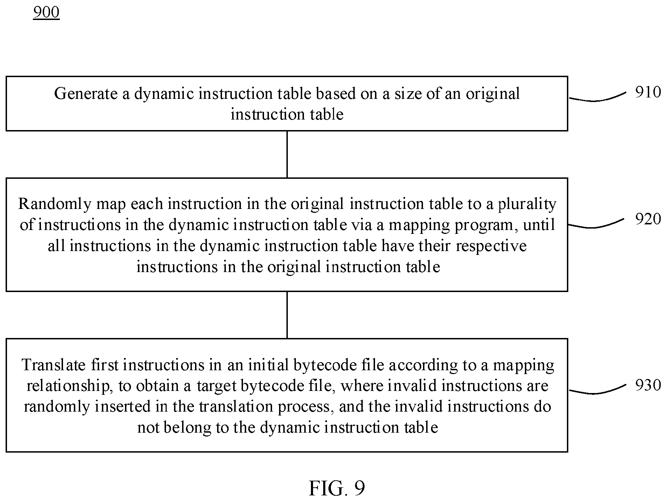

FIG. 9 is a schematic flowchart of a method for generating a target bytecode file according to an embodiment of this application. The method 900 shown in FIG. 9 may be applied to step 820 of the method 800 or step 740 of the method 700. For example, the method 900 may be performed by the random bytecode translator in FIG. 8.

The method 900 includes the following steps.

910: Generate a dynamic instruction table based on a size of an original instruction table.

The original instruction table is used to represent a first bytecode instruction set. The dynamic instruction table is used to represent a second bytecode instruction set.

The original instruction table may be a bytecode definition table of a version of a target engine in a target runtime environment.

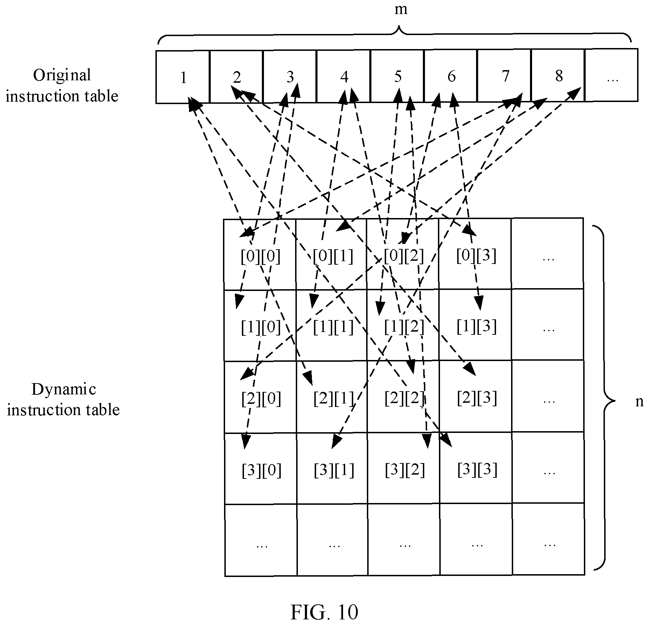

As shown in FIG. 10, the original instruction table may be a one-dimensional instruction table of size m. The original instruction table is the bytecode definition table of the version of the target engine. Numbers in the original instruction table may be used to indicate first instructions in the first bytecode instruction set. For example, numbers in the original instruction set in FIG. 10 may be used as numbers of first instructions in the first bytecode instruction set. The dynamic instruction table may be a two-dimensional instruction table of size n*n, and the two-dimensional instruction table may also be referred to as a two-dimensional array bytecode mapping table. The array in the dynamic instruction table may be used to indicate second instructions in the second bytecode instruction set. For example, numbers in the dynamic instruction set in FIG. 10 may be used as numbers of second instructions in the second bytecode instruction set.

For example, n may satisfy the following formula:

$$n = k * ceil(\sqrt{2m});$$

ceil() represents a ceiling function. k represents an adjustment parameter, which is used to adjust the size of the second bytecode instruction set. k is a positive number. For example, $k \in (1, 2, 3)$. A value of k may be fixed, or may be adjusted by the user as required.

It should be understood that step 910 is merely an example of generating the second bytecode instruction set. In other possible implementations, the second bytecode instruction set may also be generated in other manners. For example, in step 910, the second bytecode instruction set is represented by a two-dimensional array bytecode mapping table. In other possible implementations, the second bytecode instruction set may also be represented in other manners. For example, the second bytecode instruction set is represented by a one-dimensional bytecode mapping table. For another example, the second bytecode instruction set is represented by a three-dimensional bytecode mapping table. For specific description, refer to step 740 in the method 700. Details are not described herein again.

920: Randomly map each instruction in the original instruction table to a plurality of instructions in the dynamic instruction table via a mapping program, until all instructions in the dynamic instruction table have their corresponding instructions in the original instruction table.

For example, as shown in FIG. 10, each of the eight instructions in the original instruction table corresponds to two instructions in the dynamic instruction table. Each instruction in the dynamic instruction table corresponds to one instruction in the original instruction table. For example, an instruction numbered 1 in the original instruction table corresponds to an instruction numbered [2][1] and an instruction numbered [3][4] in the dynamic instruction table.

930: Translate first instructions in an initial bytecode file according to a mapping relationship, to obtain a target bytecode file, where invalid instructions are randomly inserted in the translation process. The invalid instructions do not belong to the dynamic instruction table.

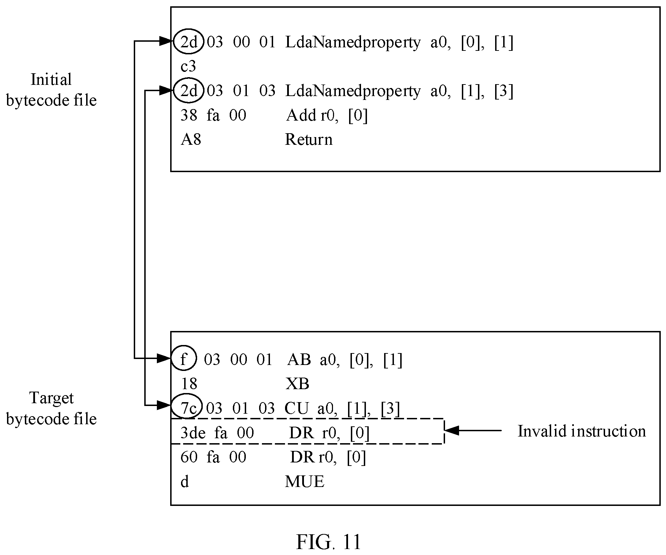

FIG. 11 is a diagram of a translation process. An initial bytecode file includes a plurality of first instructions, such as 2d, c3, and 38. A target bytecode file includes a plurality of second instructions, such as f, 7c, 60, and d.

Because each instruction in the original instruction table corresponds to a plurality of instructions in the dynamic instruction table, during the translation of the first instructions in the initial bytecode file, the same first instruction may be randomly translated into a plurality of different second instructions. For example, as shown in FIG. 11, the first instruction "2d" at different positions in the initial bytecode file is translated into "f" and "7c" in the target bytecode file.

In addition, as shown in FIG. 11, a line of invalid instructions is inserted into the target bytecode file. The invalid instructions do not belong to the dynamic instruction table.

For example, the quantity j of invalid instructions may satisfy the following formula:

$$j = ceil(\sqrt{t} * \log_a t);$$

j is the smallest integer greater than or equal to $\sqrt{t} * \log_a t$. t is the quantity of instructions in the initial bytecode file. a is a protection parameter, which is used to adjust the quantity of invalid instructions, where a is greater than 0 and is not equal to 1. For example, $a \in (2,3)$. A value of a may be fixed, or may be adjusted by the user as required.

It should be understood that the method shown in FIG. 9 is merely an example, and constitutes no limitation on the solutions of embodiments of this application.

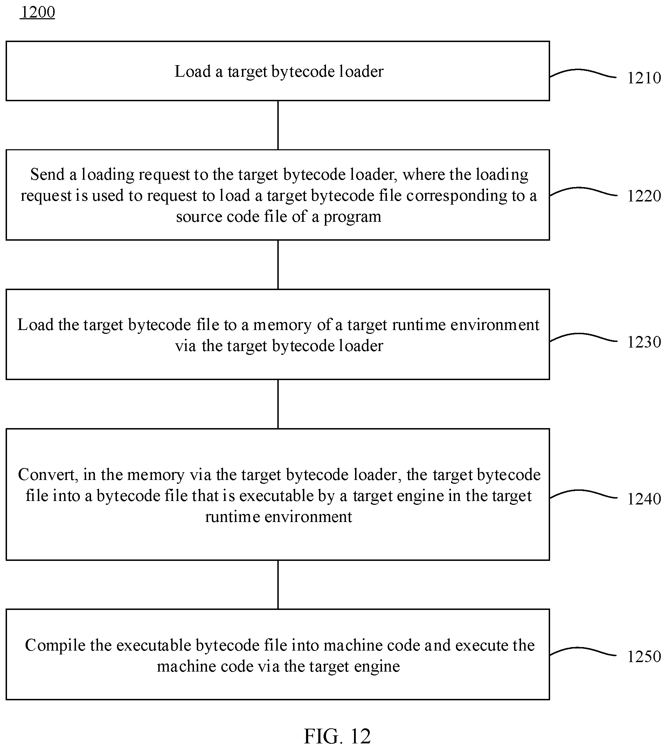

FIG. 12 shows a source code protection method according to an embodiment of this application. The method may be performed in a target runtime environment. For related content, refer to the method 600, the method 800, or the method 900. To avoid repetition, some parts are appropriately omitted in the description of the method 1200.

The method 1200 includes steps 1210 to 1250. The method 1200 is described below.

1210: Load a target bytecode loader.

1220: Send a loading request to the target bytecode loader, where the loading request is used to request to load a target bytecode file corresponding to a source code file of a program.

1230: Load the target bytecode file to a memory of a target runtime environment via the target bytecode loader.

1240: Convert, in the memory via the target bytecode loader, the target bytecode file into a bytecode file that is executable by a target engine in the target runtime environment.

1250: Compile the executable bytecode file into machine code and execute the machine code via the target engine.

The target bytecode loader is obtained through compilation.

The target bytecode file is a bytecode file that is not executable by the target engine.

For example, the target bytecode loader may be obtained through compilation by a C++ compiler.

According to the solution of this embodiment of this application, the target bytecode file is a bytecode file that is not executable by the target engine; and for execution in the target engine, the target bytecode file needs to be converted into a bytecode file that is executable by the target engine, via the target bytecode loader corresponding to the target bytecode file. In this way, even if the target bytecode file is disclosed, it is difficult to obtain useful information directly from the target bytecode file.

In addition, because the target bytecode file and the target bytecode loader need to be used together, reverse engineering also needs to be performed on the target bytecode file and the target bytecode loader together. The target bytecode loader is a binary machine code file obtained through compilation. The difficulty of reverse engineering is increased to a level of decompiling binary machine code. Reverse engineering is very difficult, and execution logic of the program is difficult to be restored. Therefore, the solution of this embodiment of this application is conducive to improving the effect of source code protection.

In addition, the target bytecode loader converts, in the memory, the target bytecode file into a bytecode file that is executable by the target engine. In other words, the conversion is dynamic conversion completed during runtime, and the target bytecode file can be executed by the target engine immediately after the conversion. This reduces a risk of leakage of the executable bytecode file, which is conducive to further improving the effect of source code protection.

Optionally, the target bytecode loader may be obtained by compiling a mapping enumeration file and a source code file of an initial bytecode loader. The mapping enumeration file is used to indicate a mapping relationship between first instructions in the first bytecode instruction set and second instructions in the second bytecode instruction set. The first instructions in the first bytecode instruction set are instructions that are executable by the target engine. Instructions in the target bytecode file belong to the second bytecode instruction set. Each of different first instructions in the first bytecode instruction set corresponds to different second instructions in the second bytecode instruction set. The second instructions are instructions that are not executable by the target engine.

The initial bytecode loader may be configured to load a bytecode file that is executable by the target engine.

An initial bytecode file is a bytecode file that is executable by the target loading engine. For example, the target bytecode loader may convert the target bytecode file into the initial bytecode file.

The target bytecode loader is obtained based on the mapping relationship. In the memory, the instructions in the target bytecode file may be converted, based on the mapping relationship, into instructions that are executable by the target engine.

Optionally, the target bytecode file may be obtained by translating, according to the mapping relationship between the first instructions in the first bytecode instruction set and the second instructions in the second bytecode instruction set, instructions in an initial bytecode file corresponding to the source code file of the program, and the instructions in the initial bytecode file belong to the first bytecode instruction set.

Optionally, each first instruction in the first bytecode instruction set corresponds to one or more second instructions in the second bytecode instruction set.

Further, at least one first instruction in the first bytecode instruction set corresponds to a plurality of second instructions in the second bytecode instruction set.

Optionally, each second instruction in the second bytecode instruction set corresponds to one first instruction in the first bytecode instruction set.

Optionally, the quantity of instructions in the second bytecode instruction set is based on the quantity of instructions in the first bytecode instruction set.

Further, the quantity of instructions in the second bytecode instruction set is n*n, the quantity of instructions in the first bytecode instruction set is m, m is a positive integer, and n is determined based on the smallest integer greater than or equal to a square root of 2m.

For example, n may satisfy the following formula:

$$n = k * ceil(\sqrt{2m});$$

ceil() represents a ceiling function. k represents an adjustment parameter, which is used to adjust the size of the second bytecode instruction set. k is a positive number. For example, $k \in (1, 2, 3)$. A value of k may be fixed, or may be adjusted by the user as required.

Optionally, the mapping relationship may be randomly generated.

Optionally, the target bytecode file includes invalid instructions, and the invalid instructions do not belong to the second bytecode instruction set.

For example, the target bytecode file is obtained by translating the instructions in the initial bytecode file according to the mapping relationship between the first instructions in the first bytecode instruction set and the second instructions in the second bytecode instruction set, where the invalid instructions are inserted in the translation process.

Optionally, the quantity of invalid instructions is based on the quantity of instructions in the initial bytecode file.

Further, the quantity j of invalid instructions may satisfy the following formula:

$$j = ceil(\sqrt{t} * \log_a t) \, ;$$

j is the smallest integer greater than or equal to $\sqrt{t} * \log_a t$. t is the quantity of instructions in the initial bytecode file. t is a positive integer. a is a protection parameter, which is used to adjust the quantity of invalid instructions, where a is greater than 0 and is not equal to 1. For example, $a \in (2,3)$. A value of a may be fixed, or may be adjusted by the user as required.

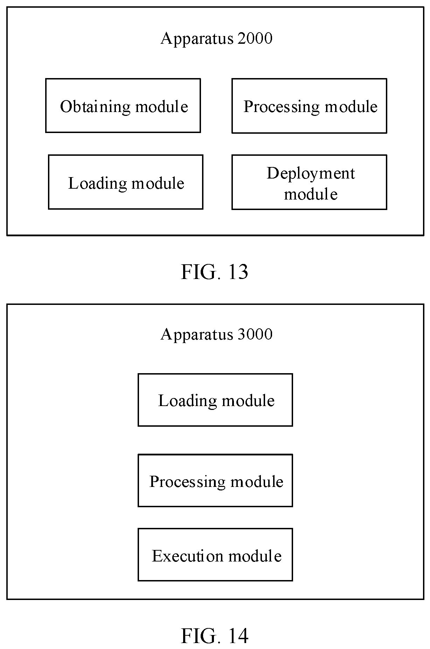

Apparatuses in embodiments of this application are described below with reference to FIG. 13 to FIG. 17. It should be understood that the apparatuses described below can perform the methods in the foregoing embodiments of this application. To avoid unnecessary repetition, repeated parts are appropriately omitted in the following description of the apparatuses in embodiments of this application.

FIG. 13 is a block diagram of a source code protection apparatus according to an embodiment of this application. The apparatus 2000 shown in FIG. 13 may be configured to perform the method shown in FIG. 7. The apparatus 2000 includes an obtaining module, a loading module, a processing module, and a deployment module.

In a possible implementation, the apparatus 2000 may be configured to perform the method shown in FIG. 7.

The obtaining module is configured to obtain a source code file of a program that is to be run in a target runtime environment.

The loading module is configured to load a bytecode compiler.

The processing module is configured to:

analyze the source code file of the program via the bytecode compiler, to obtain a syntax tree corresponding to the source code file of the program;

convert, via the bytecode compiler, the syntax tree into a target bytecode file corresponding to the source code file of the program; and

generate, via the bytecode compiler, a target bytecode loader corresponding to the target bytecode file, where the target bytecode loader is configured to convert the target bytecode file into a bytecode file that is executable by a target engine in the target runtime environment.

The deployment module is configured to deploy the target bytecode file and the target bytecode loader into the target runtime environment.

Optionally, the target bytecode file is a bytecode file that is not executable by the target engine. Optionally, at least one first instruction in the first bytecode instruction set corresponds to a plurality of second instructions in the second bytecode instruction set.

Optionally, the mapping relationship between the first instructions in the first bytecode instruction set and the second instructions in the second bytecode instruction set is randomly generated.

Optionally, a quantity of second instructions in the second bytecode instruction set is based on a quantity of first instructions in the first bytecode instruction set.

Optionally, the quantity of second instructions in the second bytecode instruction set satisfies the following formula:

$$n = k * ceil(\sqrt{2m}) \, ;$$

where n represents a square root of the quantity of second instructions in the second bytecode instruction set, n is a positive integer, m represents the quantity of first instructions in the first bytecode instruction set, m is a positive integer, ceil() represents a ceiling function, k represents an adjustment parameter, which is used to adjust the quantity of second instructions in the second bytecode instruction set, and k is a positive number.

Optionally, converting, via the bytecode compiler, the syntax tree into the target bytecode file corresponding to the source code file of the program includes:

converting, via the bytecode compiler, the syntax tree into an initial bytecode file corresponding to the source code file of the program, where instructions in the initial bytecode file belong to the first bytecode instruction set; and

translating, via the bytecode compiler, the instructions in the initial bytecode file according to the mapping relationship to obtain the target bytecode file.

Optionally, translating, via the bytecode compiler, the instructions in the initial bytecode file according to the mapping relationship to obtain the target bytecode file includes: translating, via the bytecode compiler, the instructions in the initial bytecode file according to the mapping relationship, where invalid instructions are inserted in the translation process to obtain the target bytecode file, and the invalid instructions do not belong to the second bytecode instruction set.

Optionally, the quantity of invalid instructions is based on the quantity of instructions in the initial bytecode file.

Optionally, the quantity of invalid instructions satisfies the following formula:

$$j = ceil(\sqrt{t} * \log_a t) \, ;$$

where j represents the quantity of invalid instructions, ceil() represents a ceiling function, t represents the quantity of instructions in the initial bytecode file, t is a positive integer, a represents a protection parameter, which is used to adjust the quantity of invalid instructions, and a is greater than 0 and not equal to 1.

For specific description, refer to the foregoing method 700. Details are not described herein again.

FIG. 14 is a block diagram of a source code protection apparatus according to an embodiment of this application. The apparatus 3000 shown in FIG. 14 may be configured to perform the method shown in FIG. 12. The apparatus 3000 includes a loading module, a processing module, and an execution module.

In a possible implementation, the apparatus 3000 may be configured to perform the method shown in FIG. 12.

The loading module is configured to load a target bytecode loader.

The processing module is configured to:

send a loading request to the target bytecode loader, where the loading request is used to request to load a target bytecode file corresponding to a source code file of a program;

load the target bytecode file to a memory of a target runtime environment via the target bytecode loader; and

convert, in the memory via the target bytecode loader, the target bytecode file into a bytecode file that is executable by a target engine in the target runtime environment.

The execution module is configured to compile the executable bytecode file into machine code and execute the machine code via the target engine.

Optionally, the target bytecode file is a bytecode file that is not executable by the target engine.

Optionally, the target bytecode loader is obtained by compiling a mapping enumeration file and a source code file of an initial bytecode loader, the mapping enumeration file is used to indicate a mapping relationship between first instructions in a first bytecode instruction set and second instructions in a second bytecode instruction set, the first instructions in the first bytecode instruction set are instructions that are executable by the target engine, instructions in the target bytecode file belong to the second bytecode instruction set, each of different first instructions in the first bytecode instruction set corresponds to different second instructions in the second bytecode instruction set, and the second instructions are instructions that are not executable by the target engine.

Optionally, the target bytecode file is obtained by translating, according to the mapping relationship between the first instructions in the first bytecode instruction set and the second instructions in the second bytecode instruction set, instructions in an initial bytecode file corresponding to the source code file of the program, and the instructions in the initial bytecode file belong to the first bytecode instruction set.

For specific description, refer to the foregoing method 1200. Details are not described herein again.

Each module in the apparatus 2000 and the apparatus 3000 may be implemented by software or by hardware. For example, the following uses the processing module as an example to describe an implementation of the processing module. Similarly, for an implementation of another module, refer to the implementation of the processing module.

The module is used as an example of a software functional unit, and the processing module may include code run on a computing instance. The computing instance may include at least one of a physical host (computing device), a virtual machine, and a container. Further, there may be one or more computing instances. For example, the processing module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. The VPCs are interconnected through the communication gateway.

A module is used as an example of a hardware functional unit, and the processing module may include at least one computing device such as a server. Alternatively, the processing module may be a device implemented using an application-specific integrated circuit (application-specific integrated circuit, ASIC) or a programmable logic device (programmable logic device, PLD) or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the processing module may be distributed in a same region, or may be distributed in different regions. The plurality of computing devices included in the processing module may be distributed in a same AZ, or may be distributed in different AZs. Similarly, the plurality of computing devices included in the processing module may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in other embodiments, the processing module may be configured to perform any step in the source code protection method, and other modules may be configured to perform any step in the source code protection method. Steps implemented by the modules may be specified as required, and the modules implement different steps in the source code protection method to implement all functions of the apparatus 2000 or the apparatus 3000.

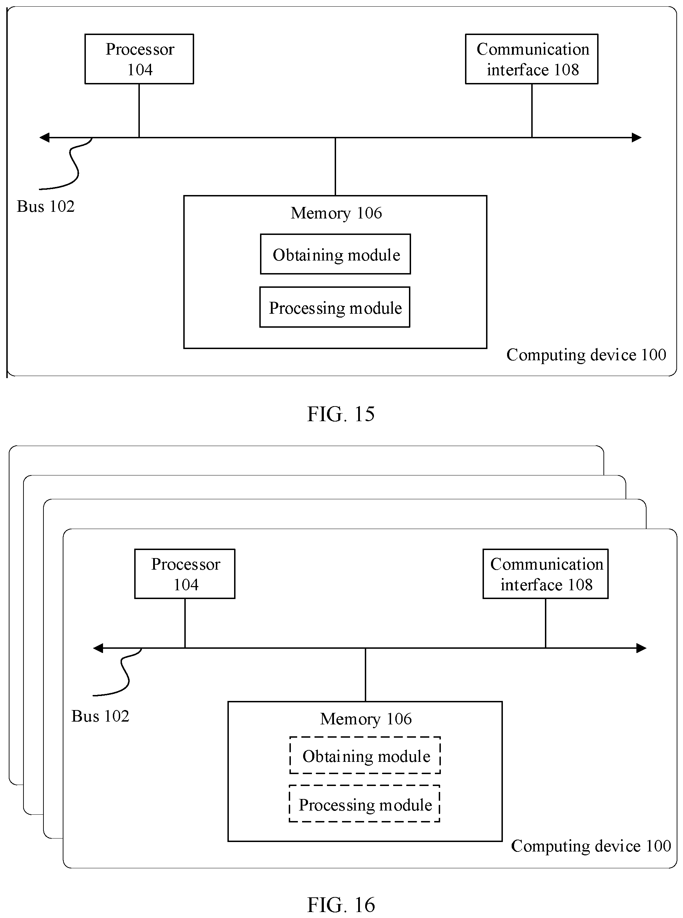

This application further provides a computing device 100. As shown in FIG. 15, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one line in FIG. 15. However, it does not indicate that there is only one bus or only one type of bus. The bus 104 may include a path for transferring information between various components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the obtaining module and the processing module described above, to implement the source code protection method. In other words, the memory 106 stores instructions for performing the source code protection method.

The communication interface 103 uses a transceiver module such as, but not limited to, a network interface card or a transceiver to implement communication between the computing device 100 and other devices or communication networks.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 16, the computing device cluster includes at least one computing device 100. A memory or memories 106 in the one or more computing devices 100 in the computing device cluster may store the same instructions for performing the source code protection method.

In some possible implementations, the memory or memories 106 in the one or more computing devices 100 in the computing device cluster may alternatively separately store some instructions for performing the source code protection method. In other words, a combination of the one or more computing devices 100 may jointly execute the instructions for performing the source code protection method.

It should be noted that memories 106 in different computing devices 100 in the computing device cluster may store different instructions, which are used to perform some functions of the source code protection apparatus. In other words, the instructions stored in the memories 106 in the different computing devices 100 may implement functions of one or more of the obtaining module and the processing module.

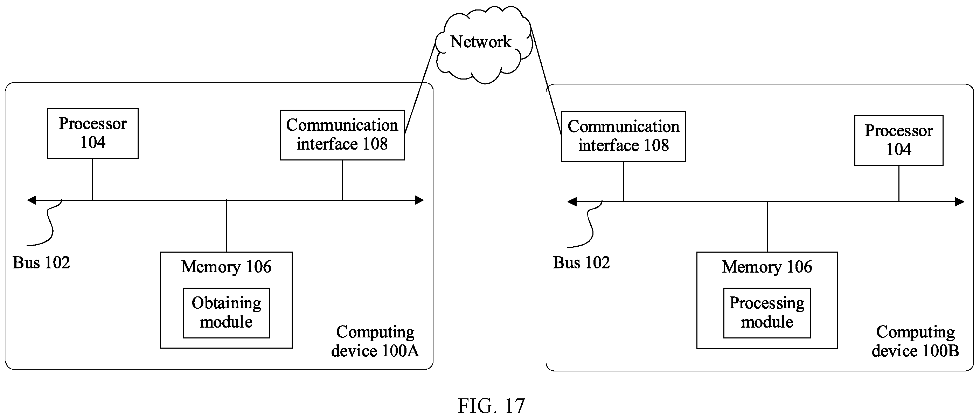

In some possible implementations, the one or more computing devices in the computing device cluster may be connected through a network. The network may be a wide area network, a local area network, or the like. FIG. 17 shows a possible implementation. As shown in FIG. 17, two computing devices 100A and 100B are connected through a network. Specifically, each computing device is connected to the network through a communication interface of the computing device. In such possible implementations, a memory 106 in the computing device 100A stores instructions for performing functions of the obtaining module. In addition, a memory 106 in the computing device 100B stores instructions for performing functions of the processing module.

For the connection manner between computing device clusters shown in FIG. 17, considering that the source code protection method provided in this application requires storage of a large amount of data, functions implemented by the processing module are handed over to the computing device 100B for execution.

It should be understood that functions of the computing device 100A shown in FIG. 17 may also be completed by a plurality of computing devices 100. Similarly, functions of the computing device 100B may also be completed by a plurality of computing devices 100.

An embodiment of this application further provides a computer program product including instructions.

The computer program product may be a software or program product that includes instructions and that can be run on a computing device or be stored in any usable medium. When the computer program product is run on at least one computing device, the at least one computing device is enabled to perform the source code protection method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions that instruct the computing device to perform the source code protection method.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of protection of the technical solutions of embodiments of this application.

## Claims

1. A source code protection method, comprising:

   obtaining a source code file of a program that is to be run in a target runtime environment;
   loading a bytecode compiler;
   analyzing the source code file of the program via the bytecode compiler, to obtain a syntax tree corresponding to the source code file of the program;
   converting, via the bytecode compiler, the syntax tree into a target bytecode file corresponding to the source code file of the program;
   generating, via the bytecode compiler, a target bytecode loader corresponding to the target bytecode file, wherein the target bytecode loader is configured to convert the target bytecode file into a bytecode file that is executable by a target engine in the target runtime environment; and
   deploying the target bytecode file and the target bytecode loader into the target runtime environment.

2. The method according to claim 1, wherein generating, via the bytecode compiler, the target bytecode loader corresponding to the target bytecode file comprises:
   compiling a mapping enumeration file and a source code file of an initial bytecode loader via the bytecode compiler, to obtain the target bytecode loader, wherein the mapping enumeration file is used to indicate a mapping relationship between first instructions in a first bytecode instruction set and second instructions in a second bytecode instruction set, the first instructions are instructions that are executable by the target engine in the target runtime environment, instructions in the target bytecode file belong to the second bytecode instruction set, each of different first instructions in the first bytecode instruction set corresponds to different second instructions in the second bytecode instruction set, and the second instructions are instructions that are not executable by the target engine.

3. The method according to claim 2, wherein at least one first instruction in the first bytecode instruction set corresponds to a plurality of second instructions in the second bytecode instruction set.

4. The method according to claim 2 or 3, wherein the mapping relationship between the first instructions in the first bytecode instruction set and the second instructions in the second bytecode instruction set is randomly generated.

5. The method according to any one of claims 2 to 4, wherein a quantity of the second instructions in the second bytecode instruction set is based on a quantity of the first instructions in the first bytecode instruction set.

6. The method according to any one of claims 2 to 5, wherein converting, via the bytecode compiler, the syntax tree into the target bytecode file corresponding to the source code file of the program comprises:

   converting, via the bytecode compiler, the syntax tree into an initial bytecode file corresponding to the source code file of the program, wherein instructions in the initial bytecode file belong to the first bytecode instruction set; and
   translating, via the bytecode compiler, the instructions in the initial bytecode file according to the mapping relationship to obtain the target bytecode file.

7. The method according to claim 6, wherein translating, via the bytecode compiler, the instructions in the initial bytecode file according to the mapping relationship to obtain the target bytecode file comprises:
   translating, via the bytecode compiler, the instructions in the initial bytecode file according to the mapping relationship, wherein invalid instructions are inserted in the translation process to obtain the target bytecode file, and the invalid instructions do not belong to the second bytecode instruction set.

8. The method according to claim 7, wherein a quantity of the invalid instructions is based on a quantity of the instructions in the initial bytecode file.

9. A source code protection method, comprising:

loading a target bytecode loader;
sending a loading request to the target bytecode loader, wherein the loading request is used to request to load a target bytecode file corresponding to a source code file of a program;
loading the target bytecode file to a memory of a target runtime environment via the target bytecode loader;
converting, in the memory via the target bytecode loader, the target bytecode file into a bytecode file that is executable by a target engine in the target runtime environment; and
compiling the executable bytecode file into machine code and executing the machine code via the target engine.

10. The method according to claim 9, wherein the target bytecode file is a bytecode file that is not executable by the target engine.

11. The method according to claim 9 or 10, wherein the target bytecode loader is obtained by compiling a mapping enumeration file and a source code file of an initial bytecode loader, the mapping enumeration file is used to indicate a mapping relationship between first instructions in a first bytecode instruction set and second instructions in a second bytecode instruction set, the first instructions are instructions that are executable by the target engine, instructions in the target bytecode file belong to the second bytecode instruction set, each of different first instructions in the first bytecode instruction set corresponds to different second instructions in the second bytecode instruction set, and the second instructions are instructions that are not executable by the target engine.

12. The method according to claim 11, wherein the target bytecode file is obtained by translating, according to the mapping relationship between the first instructions in the first bytecode instruction set and the second instructions in the second bytecode instruction set, instructions in an initial bytecode file corresponding to the source code file of the program, and the instructions in the initial bytecode file belong to the first bytecode instruction set.

13. A source code protection apparatus, comprising:

an obtaining module, configured to obtain a source code file of a program that is to be run in a target runtime environment;
a loading module, configured to load a bytecode compiler;
a processing module, configured to:

analyze the source code file of the program via the bytecode compiler, to obtain a syntax tree corresponding to the source code file of the program;
convert, via the bytecode compiler, the syntax tree into a target bytecode file corresponding to the source code file of the program; and
generate, via the bytecode compiler, a target bytecode loader corresponding to the target bytecode file, wherein the target bytecode loader is configured to convert the target bytecode file into a bytecode file that is executable by a target engine in the target runtime environment; and
a deployment module, configured to deploy the target bytecode file and the target bytecode loader into the target runtime environment.

14. The apparatus according to claim 13, wherein the processing module is specifically configured to:
compile a mapping enumeration file and a source code file of an initial bytecode loader via the bytecode compiler, to obtain the target bytecode loader, wherein the mapping enumeration file is used to indicate a mapping relationship between first instructions in a first bytecode instruction set and second instructions in a second bytecode instruction set, the first instructions are instructions that are executable by the target engine in the target runtime environment, instructions in the target bytecode file belong to the second bytecode instruction set, each of different first instructions in the first bytecode instruction set corresponds to different second instructions in the second bytecode instruction set, and the second instructions are instructions that are not executable by the target engine.

15. The apparatus according to claim 14, wherein at least one first instruction in the first bytecode instruction set corresponds to a plurality of second instructions in the second bytecode instruction set.

16. The apparatus according to claim 14 or 15, wherein the mapping relationship between the first instructions in the first bytecode instruction set and the second instructions in the second bytecode instruction set is randomly generated.

**17.** The apparatus according to any one of claims 14 to 16, wherein a quantity of the second instructions in the second bytecode instruction set is based on a quantity of the first instructions in the first bytecode instruction set.

**18.** The apparatus according to any one of claims 14 to 17, wherein the processing unit is specifically configured to:

> convert, via the bytecode compiler, the syntax tree into an initial bytecode file corresponding to the source code file of the program, wherein instructions in the initial bytecode file belong to the first bytecode instruction set; and translate, via the bytecode compiler, the instructions in the initial bytecode file according to the mapping relationship to obtain the target bytecode file.

**19.** The apparatus according to claim 18, wherein the processing unit is specifically configured to:
translate, via the bytecode compiler, the instructions in the initial bytecode file according to the mapping relationship, wherein invalid instructions are inserted in the translation process to obtain the target bytecode file, and the invalid instructions do not belong to the second bytecode instruction set.

**20.** The apparatus according to claim 19, wherein a quantity of the invalid instructions is based on a quantity of the instructions in the initial bytecode file.

**21.** A source code protection apparatus, comprising:

> a loading module, configured to load a target bytecode loader;
> a processing module, configured to:
>
>> send a loading request to the target bytecode loader, wherein the loading request is used to request to load a target bytecode file corresponding to a source code file of a program;
>> load the target bytecode file to a memory of a target runtime environment via the target bytecode loader; and
>> convert, in the memory via the target bytecode loader, the target bytecode file into a bytecode file that is executable by a target engine in the target runtime environment; and
>> an execution module, configured to compile the executable bytecode file into machine code and execute the machine code via the target engine.

**22.** The apparatus according to claim 21, wherein the target bytecode file is a bytecode file that is not executable by the target engine.

**23.** The apparatus according to claim 21 or 22, wherein the target bytecode loader is obtained by compiling a mapping enumeration file and a source code file of an initial bytecode loader, the mapping enumeration file is used to indicate a mapping relationship between first instructions in a first bytecode instruction set and second instructions in a second bytecode instruction set, the first instructions are instructions that are executable by the target engine, instructions in the target bytecode file belong to the second bytecode instruction set, each of different first instructions in the first bytecode instruction set corresponds to different second instructions in the second bytecode instruction set, and the second instructions are instructions that are not executable by the target engine.

**24.** The apparatus according to claim 22, wherein the target bytecode file is obtained by translating, according to the mapping relationship between the first instructions in the first bytecode instruction set and the second instructions in the second bytecode instruction set, instructions in an initial bytecode file corresponding to the source code file of the program, and the instructions in the initial bytecode file belong to the first bytecode instruction set.

**25.** A computing device cluster, comprising at least one computing device, wherein each computing device comprises a processor and a memory; and the processor of the at least one computing device is configured to execute instructions stored in the memory of the at least one computing device, to enable the computing device cluster to perform the method according to any one of claims 1 to 8 or 9 to 12.

**26.** A computer-readable storage medium, comprising computer program instructions, wherein when the computer program instructions are executed by a computing device cluster, the computing device cluster performs the method according to any one of claims 1 to 8 or 9 to 12.

**27.** A computer program product comprising instructions, wherein when the instructions are run by a computing device cluster, the computing device cluster is enabled to perform the method according to any one of claims 1 to 8 or 9 to 12.

Public key

E2   7F

uU   1N

3X   U6

...

Source code → Encryption → Encrypted file

Private key

Decryption → Source code

FIG. 1

Obfuscator

Readable
source code → Obfuscation → Unreadable
source code

FIG. 2

Source code — Compilation → Bytecode
2d 03 00 01
c3
2d 03 01 03
38 fa 00
a8

Compiler

FIG. 3

FIG. 4

**Office development environment**

**Development environment**

Source code that is run on a browser

**Development environment**

Source code that is run on a browser

**Build environment**

Dynamic bytecode Mapping compiler

Dynamic bytecode loader ← Loading — Dynamic bytecode file

**Cloud environment**

CDN service

**User environment network**

Browser

Browser

Browser

FIG. 5

FIG. 6

700

| Obtain a source code file of a program that is to be run in a target runtime environment | — 710 |

| Load a bytecode compiler | — 720 |

| Analyze the source code file of the program via the bytecode compiler, to obtain a syntax tree corresponding to the source code file of the program. | — 730 |

| Convert, via the bytecode compiler, the syntax tree into a target bytecode file corresponding to the source code file of the program | — 740 |

| Generate, via the bytecode compiler, a target bytecode loader corresponding to the target bytecode file, where the target bytecode loader is configured to convert in a memory the target bytecode file into a bytecode file that is executable by a target engine in the target runtime environment | — 750 |

| Deploy the target bytecode file and the target bytecode loader into the target runtime environment | — 760 |

FIG. 7

**Dynamic bytecode mapping compiler**

Abstract syntax tree

Source code

```
function sum(nums){
    return nums.a+nums.b;
}
sum({a:1, b:1})
```

Syntax tree parser

return

+

-
(load prop)

-
(load prop)

nums    a    nums    b

Random bytecode translator

Dynamic bytecode file

```
f   03  00  01   AB  a0,  [0], [1]
18               XB
7c  03  01  03   CU  a0,  [1], [3]
3de fa  00       DR  r0,  [0]
60  fa  00       DR  r0,  [0]
d                MUE
```

Bytecode definition mapping enumeration file

Source code file of an initial bytecode loader

```
//bin-loader.cpp
Loader::loadByteCode(){
    ...
}

Loader::toVBByteCode(){
    ...
}
```

```
//dyn-bytecodes.h
enum class
Bytecode: unit8_t{
    AB,
    UY,
    XB,
    XM,
    CU,
    DR,
    MUE,
}
ByteCode
MappingArray=[
2,1,3,4,5......
]
```

C++ compiler

Dynamic bytecode loader

Machine code

```
mov eax,  [ ebp + 0x10 ]    ;
mov ecx,  0x56a79431        ;
call  $LoadNamedProperty
push eax
mov eax,  [ ebp + 0x10 ]    ;
mov ecx,  0x56a71251        ;
call  $LoadNamedProperty
pop edx
call  $BinaryOpAdd
```

V8

Executable V8 bytecode file

```
2d  03  00  01  LdaNamedproperty  a0, [0], [1]
c3
2d  03  01  03  LdaNamedproperty  a0, [1], [3]
38  fa  00      Add r0, [0]
A8              Return
```

FIG. 8

27

900

| Generate a dynamic instruction table based on a size of an original instruction table | 910 |

| Randomly map each instruction in the original instruction table to a plurality of instructions in the dynamic instruction table via a mapping program, until all instructions in the dynamic instruction table have their respective instructions in the original instruction table | 920 |

| Translate first instructions in an initial bytecode file according to a mapping relationship, to obtain a target bytecode file, where invalid instructions are randomly inserted in the translation process, and the invalid instructions do not belong to the dynamic instruction table | 930 |

FIG. 9

FIG. 10

Initial
bytecode file

```
(2d) 03  00  01  LdaNamedproperty  a0,  [0],  [1]
c3
(2d) 03  01  03  LdaNamedproperty  a0,  [1],  [3]
38  fa  00       Add r0,  [0]
A8               Return
```

Target
bytecode file

```
( f )  03  00  01  AB  a0,  [0], [1]
18                 XB
(7c) 03  01  03  CU  a0,  [1],  [3]
3de fa  00       DR  r0,  [0]          ◄—— Invalid instruction
60  fa  00       DR r0,  [0]
d                MUE
```

FIG. 11

1200

Load a target bytecode loader — 1210

Send a loading request to the target bytecode loader, where the loading request is used to request to load a target bytecode file corresponding to a source code file of a program — 1220

Load the target bytecode file to a memory of a target runtime environment via the target bytecode loader — 1230

Convert, in the memory via the target bytecode loader, the target bytecode file into a bytecode file that is executable by a target engine in the target runtime environment — 1240

Compile the executable bytecode file into machine code and execute the machine code via the target engine — 1250

FIG. 12

Apparatus 2000

Obtaining module

Processing module

Loading module

Deployment module

FIG. 13

Apparatus 3000

Loading module

Processing module

Execution module

FIG. 14

FIG. 15

FIG. 16

FIG. 17

## INTERNATIONAL SEARCH REPORT

| International application No. |
|---|
| **PCT/CN2023/127131** |

**A. CLASSIFICATION OF SUBJECT MATTER**

G06F 21/12(2013.01)i

According to International Patent Classification (IPC) or to both national classification and IPC

**B. FIELDS SEARCHED**

Minimum documentation searched (classification system followed by classification symbols)

IPC: G06F 21/-, G06F 8/-

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, CNKI: 保护, 编译器, 加载器, 源码, 字节码, 语法树, 可执行, protect+, compiler, loader, source code?, bytecode, syntax tree, executable

**C. DOCUMENTS CONSIDERED TO BE RELEVANT**

| Category* | Citation of document, with indication, where appropriate, of the relevant passages | Relevant to claim No. |
|---|---|---|
| X | CN 107784231 A (BEIJING HUAJIA TECHNOLOGY CO., LTD.) 09 March 2018 (2018-03-09) description, paragraphs 70-133, and claims 1-10 | 1, 9-10, 13, 21-22, 25-27 |
| X | CN 112966227 A (CHINA SOUTHERN POWER GRID SHENZHEN DIGITAL GRID RESEARCH INSTITUTE CO., LTD.) 15 June 2021 (2021-06-15) description, paragraphs 45-113, and claims 1-10 | 1, 9-10, 13, 21-22, 25-27 |
| A | CN 104268444 A (INSPUR ELECTRONIC INFORMATION INDUSTRY CO., LTD.) 07 January 2015 (2015-01-07) entire document | 1-27 |
| A | CN 110245468 A (ALIBABA GROUP HOLDING LIMITED) 17 September 2019 (2019-09-17) entire document | 1-27 |
| A | CN 110716715 A (HUNDSUN TECHNOLOGIES INC.) 21 January 2020 (2020-01-21) entire document | 1-27 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 January 2024** | **16 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/127131** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022075847 A1 (ASSURED INFORMATION SECURITY, INC.) 10 March 2022 (2022-03-10)<br>          entire document | 1-27 |

Form PCT/ISA/210 (second sheet) (July 2022)

**INTERNATIONAL SEARCH REPORT**
Information on patent family members

International application No.

**PCT/CN2023/127131**

| Patent document cited in search report | | | Publication date (day/month/year) | Patent family member(s) | | | Publication date (day/month/year) |
|---|---|---|---|---|---|---|---|
| CN | 107784231 | A | 09 March 2018 | CN | 107784231 | B | 08 June 2021 |
| CN | 112966227 | A | 15 June 2021 | None | | | |
| CN | 104268444 | A | 07 January 2015 | None | | | |
| CN | 110245468 | A | 17 September 2019 | CN | 110245468 | B | 16 June 2023 |
| CN | 110716715 | A | 21 January 2020 | None | | | |
| US | 2022075847 | A1 | 10 March 2022 | US | 11550883 | B2 | 10 January 2023 |

Form PCT/ISA/210 (patent family annex) (July 2022)

**REFERENCES CITED IN THE DESCRIPTION**

**Patent documents cited in the description**

- CN 202310027783

- CN 202310429406